## Europäisches Patentamt
## European Patent Office
## Office européen des brevets

(19)

(11) Numéro de publication: **0 108 020 B1**

(12) ## FASCICULE DE BREVET EUROPEEN

(45) Date de publication du fascicule du brevet:
24.06.87

(51) Int. Cl.⁴: **G 21 C 11/06**, G 21 C 7/26

(21) Numéro de dépôt: **83402093.5**

(22) Date de dépôt: **27.10.83**

(54) **Réacteur nucléaire à rendement amélioré.**

(30) Priorité: **27.10.82 FR 8218012**

(43) Date de publication de la demande:
**09.05.84 Bulletin 84/19**

(45) Mention de la délivrance du brevet:
**24.06.87 Bulletin 87/26**

(84) Etats contractants désignés:
**AT BE CH DE GB IT LI SE**

(56) Documents cités:
**EP - A - 0 054 787**
**FR - A - 2 080 625**
**GB - A - 850 014**
**US - A - 3 247 075**
**US - A - 3 260 650**
**US - A - 3 644 173**
**US - A - 3 929 565**
**US - A - 3 998 692**

(73) Titulaire: **Framatome, Tour Fiat 1 place de la Coupole, F-92400 Courbevoie (FR)**

(72) Inventeur: **Millot, Jean-Paul, 1 allée des Roitelets, F-78310 Elancourt (FR)**
Inventeur: **Desfontaines, Guy, 18 rue Jean Jaurès, F-92800 Puteaux (FR)**

(74) Mandataire: **Fort, Jacques, CABINET PLASSERAUD 84, rue d'Amsterdam, F-75009 Paris (FR)**

ACTORUM AG

## Description

L'invention concerne un réacteur nucléaire à rendement amélioré susceptible de mieux utiliser le matériau combustible des assemblages du cœur.

Les réacteurs nucléaires refroidis et modérés par de l'eau légère sous pression comportent une cuve contenant le cœur du réacteur plongé dans de l'eau sous pression remplissant la cuve. Le cœur du réacteur comporte des assemblages de grande hauteur par rapport à leur section transversale disposés verticalement et côte à côte. Les assemblages sont eux-mêmes constitués par des faisceaux de crayons combustibles fissiles en contact par leur surface externe avec l'eau de refroidissement du réacteur.

Pour la conduite du réacteur, on utilise un ensemble de barres de commande associées à certains assemblages du cœur. Ces barres de commande sont constituées par des barreaux parallèles de matériau absorbant fortement les neutrons qui peuvent être déplacés verticalement à l'intérieur de tubes guides se substituant à certains crayons combustibles dans les assemblages constituant le cœur.

Un des problèmes importants lié à l'exploitation des réacteurs nucléaires est l'obtention d'un rendement élevé en ce qui concerne l'utilisation du combustible nucléaire des assemblages. Ce combustible est généralement constitué par de l'uranium sous forme d'oxyde d'uranium renfermant de façon prépondérante de l'uranium 238 fertile et une quantité d'uranium 235, fissile variable en fonction de l'enrichissement du combustible.

Pendant le fonctionnement du réacteur, le combustible fissile est consommé, si bien qu'il est nécessaire de remplacer une partie au moins des assemblages du cœur du réacteur après une certaine durée de fonctionnement.

Le coût des opérations d'enrichissement, de rechargement, de remplacement du combustible usagé et de son retraitement est très élevé, si bien qu'il est souhaitable d'utiliser le mieux possible le combustible introduit dans le cœur du réacteur, pour améliorer les conditions économiques d'exploitation du réacteur.

On cherche en particulier à réaliser une combustion la plus complète possible de l'uranium contenu dans le matériau des assemblages. En améliorant la combustion de l'uranium on peut soit augmenter la durée de vie du cœur pour une charge initiale d'uranium fissile déterminée ou diminuer la charge initiale du cœur en uranium fissile, pour une durée de vie donnée. Dans le premier cas, on diminue les frais d'exploitation du réacteur nucléaire en opérant des rechargements plus espacés dans le temps. Dans le second cas, on pourra par exemple soit diminuer le volume et la masse totale des crayons combustibles du cœur, soit encore utiliser un combustible ayant un taux d'enrichissement inférieur. On diminuera ainsi le coût de la charge de combustible.

Pour la conduite du réacteur, c'est-à-dire pour le règlage de la réactivité du cœur, on utilise des matériaux absorbant les neutrons soit sous forme de barres de commande qui sont insérées dans le cœur du réacteur, soit sous forme d'éléments dissous dans l'eau de réfrigération et de modération du réacteur. Après le chargement du cœur, la réactivité de celui-ci est élevée, si bien qu'il faut utiliser des matériaux absorbants en quantité accrue pour la conduite du réacteur. On introduit par exemple dans les tubes guides de certains assemblages du cœur des grappes de crayons renfermant des poisons consommables ou encore on introduit dans l'eau de refroidissement des poisons absorbeurs de neutrons en quantité importante.

Lorsque l'excès de réactivité diminue du fait de l'usure du combustible, on diminue parallèlement la concentration des poisons absorbeurs de neutrons qui sont dissous. Ces poisons absorbeurs de neutrons qui sont nécessaires pour la conduite du réacteur dans son état initial sont coûteux en eux-mêmes et réduisent le rendement énergétique du combustible fissile contenu dans le cœur.

On a proposé d'utiliser l'excès de réactivité du cœur dans son état initial pour produire un combustible fissile (plutonium 239) à partir de l'uranium 238 contenu dans le combustible des assemblages. Pour cela, on déplace le spectre d'énergie des neutrons dans le cœur, vers les hautes énergies, en diminuant le rapport du volume de modérateur au volume du combustible dans le cœur, pendant la première partie du cycle du combustible. Lorsque l'excédent de réactivité du combustible devient pratiquement nul, on ramène le rapport volume de modérateur sur volume de combustible à une valeur permettant de ramener le spectre des neutrons dans sa zone habituelle pour les réacteurs nucléaires à eau sous pression. Les neutrons sont alors dits «thermiques» ou «lents». Ceci a pour effet de produire un nouvel excédent de réactivité qui permet d'allonger la durée d'utilisation du combustible.

Le document EP-A 0 054 787 décrit un réacteur du type dit «à variation de spectre» dans lequel on agit sur le rapport volume de modérateur sur volume de combustible, en introduisant, dans la première partie du cycle du combustible, des barreaux en matériau transparent aux neutrons, à l'intérieur de certains tubes guides des assemblages du cœur. On chasse ainsi l'eau renfermée par ces tubes guides et l'on diminue d'autant le volume de modérateur dans le cœur.

Pour obtenir un effet sensible, il est nécessaire de déplacer environ 20% de l'eau de refroidissement pendant à peu près 60% de la durée de vie du cœur. Pour cela, il faut utiliser un très grand nombre de crayons transparents aux neutrons introduits dans tous les tubes guides des assemblages du cœur, à l'exception de ceux utilisés pour le guidage des barres de commande absorbantes du réacteur.

Ceci complique considérablement la conception et la construction du réacteur.

En effet, les équipements contenant le cœur du

réacteur doivent être dimensionnés de façon à pouvoir effectuer le guidage au-dessus du cœur et la commande en translation des barres de variation de spectre. Cette conception impose donc une implantation d'un nombre important de tubes de guidage, dans la partie des équipements internes par laquelle s'échappe normalement l'eau chargée de calories, au détriment du bilan hydraulique du réacteur. On doit donc recourir à une nouvelle conception de la circulation du réfrigérant dans la cuve du réacteur. Par ailleurs, la commande en translation de ces grappes oblige à implanter sur le couvercle de la cuve un nombre très important de mécanismes de commande qui doivent' s'intercaler avec les mécanismes existant des grappes de contrôle permettant le pilotage du réacteur. Toutes ces astreintes conduisent en particulier, à puissance égale, à augmenter la taille de la cuve du réacteur par rapport à un réacteur classique.

En outre, un déplacement du spectre des neutrons vers les hautes énergies entraîne une déperdition accrue de neutrons à l'extérieur du réacteur et une «fragilisation» plus importante de l'acier de la cuve du réacteur.

On connait par ailleurs (US-A 3 998 692) un réacteur du type à cœur à germes et couvertures (seed and blanket) constitué par juxtaposition de modules dont chacun comprend un germe central déplaçable verticalement et formé par un faisceau de crayons de combustible et une couverture fixe contenant du matériau fertile. Autour du cœur sont juxtaposés des modules massifs formant réflecteur. Aucune variation du spectre d'énergie des neutrons au cours d'un cycle de fonctionnement n'est prévue.

Le but de l'invention est donc de proposer un réacteur nucléaire à rendement amélioré du type dit à variation de spectre tel que défini dans le préambule de la revendication 1. Elle vise plus particulièrement à fournir un tel réacteur nucléaire permettant une meilleurs utilisation du combustible des assemblages et une réduction de la fluence neutronique donc de l'effet de fragilisation de l'acier de la cuve du réacteur, gardant cependant une structure, et une conception simple.

Dans ce but, le réacteur nucléaire suivant l'invention comporte de plus:

– un cloisonnement métallique massif en matériau réfléchissant les neutrons à haute énergie disposé à la périphérie du cœur et sur tout sa hauteur et,

– deux couches de matériau absorbant les neutrons à basse énergie et renfermant de la matière fertile disposées l'une à la partie inférieure du cœur et l'autre à sa partie supérieure, sur toute sa section et

– en ce que les barres de variation du spectre d'énergie des neutrons (27) sont en un matériau absorbant les neutrons à basse énergie.

Suivant un mode de réalisation préférentiel, les barres de variation de spectre sont associées à un assemblage combustible sur deux dans le cœur suivant une disposition en damier.

Afin de bien faire comprendre l'invention, on va maintenant décrire, à titre d'exemple non limitatif, un réacteur nucléaire de grande puissance, suivant l'invention.

La fig. 1 est une vue en coupe, par un plan vertical de symétrie, de la cuve du réacteur nucléaire,

La fig. 2 est une vue en coupe suivant AA de la figure 1,

La fig. 3 est une vue en coupe suivant BB de la figure 1,

La fig. 4 est une vue à plus grande échelle d'une partie de la section du cœur représentée à la figure 3 montrant la disposition des barres de commande et de variation du spectre neutronique dans les assemblages du cœur du réacteur.

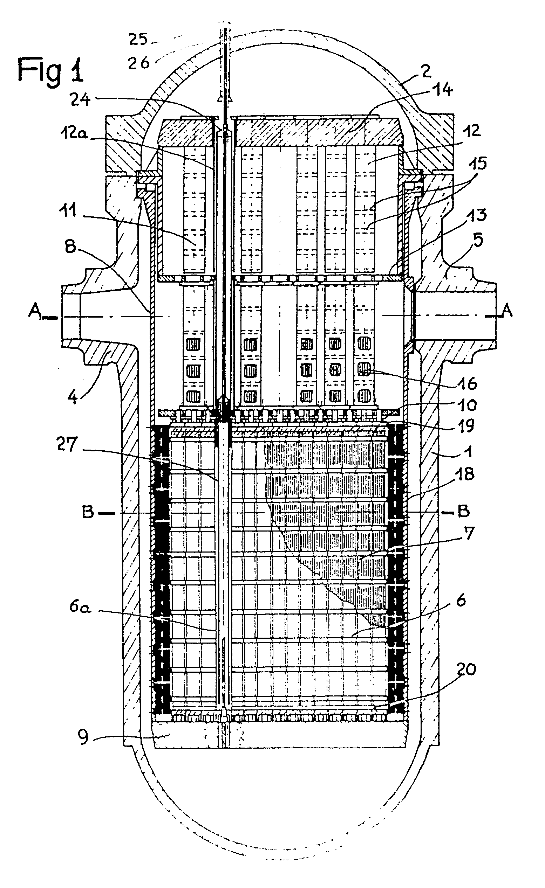

Sur la fig. 1, on voit la cuve 1 du réacteur fermée par un couvercle bombé 2.

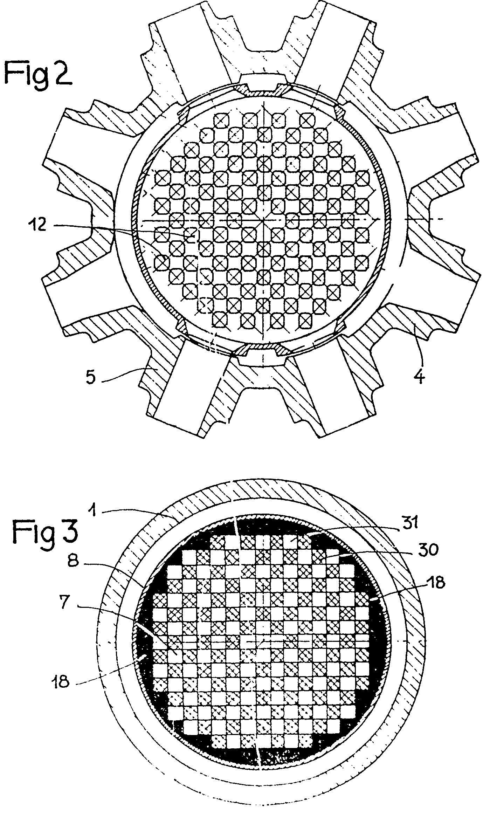

Comme il est visible sur les figures 1 et 2, la cuve comporte quatre tubulures d'arrivée d'eau sous pression 4 et quatre tubulures de sortie d'eau 5. Les tubulures 4 sont reliées aux branches froides du circuit primaire du reacteur et les tubulures 5 aux branches chaudes conduisant l'eau sous pression échauffée au contact des assemblages 6 du cœur 7 du réacteur vers des générateurs de vapeur non représentés.

A l'intérieur de la cuve 1 sont suspendus les équipements internes comportant en particulier une virole 8 constituant l'enveloppe du cœur 7 et portant, à sa partie inférieure, la plaque 9 de support du cœur. La plaque 9 est percé d'ouvertures en correspondance avec les assemblages du cœur. Ainsi qu'il est visible sur la figure 3, le cœur comporte cent quatre-vingt treize assemblages à section carrée reposant sur la plaque 9. Au-dessus du cœur 7 sont situés les équipements internes supérieurs 11 du réacteur. Ces équipements internes supérieurs 11 comportent des tubes de guidage 12 des barres, servant d'entretoises et assurant la liaison entre une plaque intermédiaire 13 et une plaque de cœur 10 auxquelles ils sont liés. Les équipements internes comportent également une plaque supérieure 14 à laquelle sont fixées les parties supérieures des tubes 12. Les plaques 13 et 14 sont fixées sur des viroles coaxiales à la virole 8 et maintenues, comme la virole 8, entre le couvercle 2 et la cuve 1. Les tubes 12 renferment des cartes de guidage 15 et des dispositifs de guidage continus permettant de maintenir et guider les barres pendant leurs mouvements verticaux dans le cœur. A leur partie inférieure les tubes 12 sont percés d'ouvertures 16 pour permettre la sortie de l'eau, parcourant les assemblages munis de grappe, vers les tubulures de sortie de la cuve. Ces tubes 12 sont réalisés en deux parties, la partie supérieure des tubes est suspendue à la plaque supérieure 14 et leur partie inférieure joue le rôle d'entretoise entre les plaques 10 et 13.

L'espace annulaire compris entre le cœur 7 dont on voit la section sur la figure 3 et l'enveloppe de cœur 8 est rempli par un cloisonnement massif 18 en acier inoxydable servant de réflecteur en particulier pour les neutrons à haute éner-

gie produits dans le cœur. Le cloisonnement massif 18 occupe pratiquement tout le volume compris entre le cœur et l'enveloppe de cœur.

Les crayons combustibles des assemblages sont constitués par des tubes en zirconium de grande longueur renfermant des pastilles d'oxyde d'uranium enrichi en uranium 235. A chacune de leurs extrêmités, sur une longueur de dix centimètres environ, les tubes en zirconium sont remplis par des pastilles d'oxyde d'uranium (UO$_2$) appauvri en uranium 235 remplaçant les pastilles en oxyde d'uranium enrichi. On constitue ainsi deux couches pratiquement continues 19 et 20 en uranium appauvri à l'extrémité supérieure et à l'extrêmité inférieure du cœur respectivement.

Ces couches 19 et 20 permettent d'absorber les neutrons à faible énergie et fournissent de l'uranium 238 susceptible de se transformer en plutonium 239 sous l'effet du bombardement par les neutrons à haute énergie.

Le cloisonnement en acier inoxydable 18 et les couches d'uranium appauvri 19 et 20 permettent ainsi de limiter au minimum la sortie des neutrons en dehors du cœur, ce qui améliore le rendement du réacteur.

De plus, on diminue ainsi la fluence au voisinage de la cuve.

Sur la figure 2, on voit l'ensemble des tubes de guidage 12 permettant le guidage des barres dans le cœur du réacteur. Pour l'ensemble du cœur on utilise quatre-vingt seize grappes de crayons absorbants, chacune de ces grappes pouvant être introduite dans les tubes guides d'un assemblage.

Sur la fig. 1 on voit une telle grappe de crayons absorbants ou barre de commande 24 en position haute, celle-ci étant fixée à une tige de commande 25 elle-même mobile dans une chambre tubulaire 26 en communication avec l'intérieur de la cuve. En haut de la chambre 26 est placé un mécanisme de déplacement de la tige 25 non représenté. Un tel mécanisme de type classique à cliquets permet de déplacer dans la direction verticale et de façon très précise la barre de commande 24 à l'intérieur des tubes guides de l'assemblage 6a disposé à la verticale du tube 12a.

On voit également sur la figure 1, un ensemble de barres de variation du spectre d'énergie des neutrons 27 entièrement insérées dans les tubes guides de l'assemblage 6a. Ces barres de variation du spectre d'énergie des neutrons sont constituées par une grappe de tubes en alliage de zirconium remplis par des pastilles d'uranium appauvri sur toute leur longueur.

Les grappes de commande aussi bien que les grappes de variation du spectre d'énergie des neutrons ont la même longueur que les assemblages.

Les barres de variation du spectre neutronique 27 peuvent être dans l'une ou l'autre de deux positions, l'une de ces positions étant la position complètement insérées représentée à la figure 1, et l'autre position la position complètement extraites équivalant à la position de la grappe de commande 24 représentée sur la figure 1. Un dispositif de déplacement associé à la barre de variation de spectre 27 permet de la déplacer de l'une à l'autre de ces deux positions. Dans leur position complètement insérés, les crayons absorbants constituant la barre de variation de spectre sont engagés dans l'assemblage 6 sur toute leur longueur.

En se reportant aux figures 2 et 3, on voit que pour un cœur comportant cent quatre-vingt treize assemblages, on utilise quatre-vingt seize tubes de guidage 12 permettant chacun le guidage à la fois d'une barre de commande 24 et d'une barre de variation de spectre 27. On voit également que ces tubes de guidage 12 sont disposés à la verticale d'assemblages combustibles 30 disposés en damier dans la section du cœur. Un assemblage sur deux est donc équipé à la fois d'une barre de commande et d'une barre de variation de spectre en uranium appauvri.

Les assemblages 31 adjacents aux assemblages 30 équipés de barres de commande et de barres de variation de spectre ne reçoivent ni l'un ni l'autre de ces deux types de barres absorbantes.

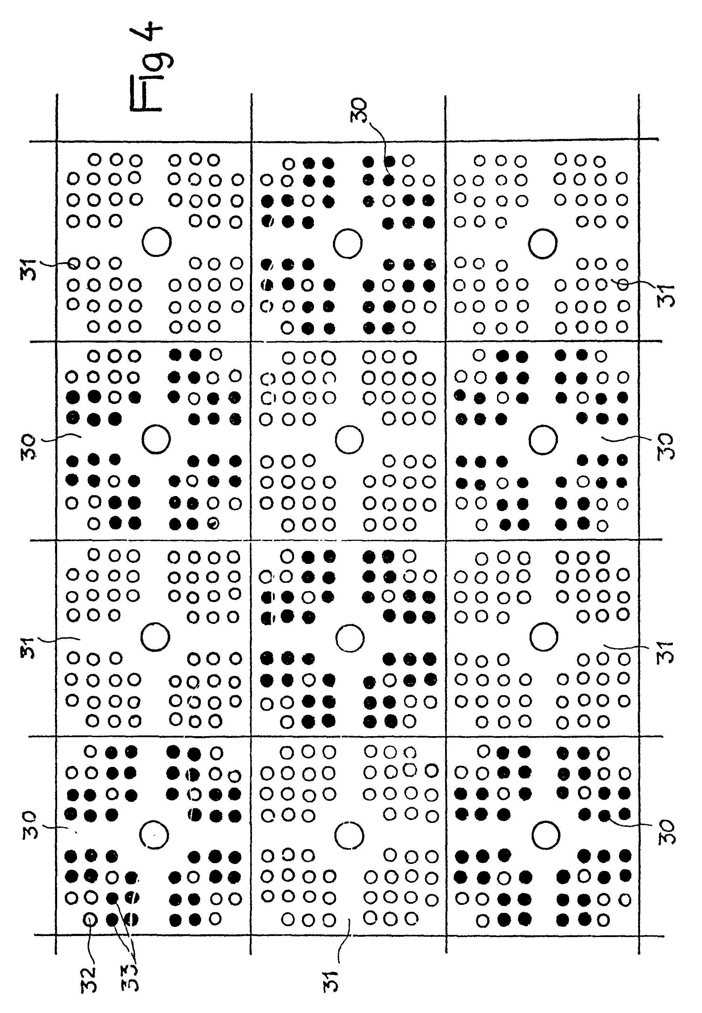

En se reportant à la figure 4, on voit la disposition des tubes guides 32 destinés à recevoir des barres de commande et des tubes-guides 33 destinés à recevoir des barres de variation de spectre. Chaque assemblage comporte cinquante six tubes guides dont seize tubes destinés à recevoir des barres de commande et quarante tubes destinés à recevoir des barres de variation de spectre.

Les tubes guides des assemblages 30 reçoivent effectivement ces barres pendant le fonctionnement du réacteur alors que les tubes guides correspondant des assemblages 31 reçoivent une grappe de bouchons permettant de créer une perte de charge équivalent à celle due aux barres introduites dans les tubes 32 et 33 des assemblages 30.

L'ensemble de la grappe 24 constituant la barre de commande reproduit la répartition transversale des tubes guides 32 représentée à la figure 4, alors que l'ensemble de la grappe 27 reproduit la répartition des tubes guides 33 également représentée sur la figure 4.

En début de cycle du combustible, c'est-à-dire après un chargement, on utilise les mécanismes de déplacement des barres de variation de spectre pour mettre toutes les barres en uranium appauvri en position d'insertion maximum dans les assemblages 30, si bien que le volume de modérateur par rapport au volume de combustible dans le cœur du réacteur se trouve considérablement réduit. De plus, chacun des crayons en uranium appauvri des barres de variation de spectre absorbe localement les neutrons de basse énergie, ce qui provoque un déplacement accru du spectre des neutrons vers les hautes énergies.

Cet effet local répéré dans l'ensemble du cœur par les barres de variation de spectre réparties de façon régulière dans un assemblage sur deux provoque un effet global de durcissement du spectre à l'intérieur du cœur du réacteur.

On obtient ainsi, à la fois par diminution du volume du modérateur et par absorption des neutrons de faible énergie, un déplacement de spectre suffisant pour produire une conversion appréciable de l'uranium 238 du combustible en plutonium 239.

Les barres en uranium appauvri absorbent les neutrons lents excédentaires à ceux qui sont nécessaires pour l'entretien de la réaction en chaîne dans le cœur et donnent lieu à la formation de plutonium 239 sous l'effet du bombardement par les neutrons de plus forte énergie.

Après un fonctionnement avec les barres de variation de spectre insérées pendant une partie notable du cycle du réacteur, on extrait ces barres. Après l'extraction des barres de variation de spectre, la matière fissile formée par le bombardement neutronique à haute énergie pendant la première phase est consommée à l'intérieur du cœur du réacteur.

Par l'effet accru de déplacement du spectre des barres absorbantes en uranium appauvri et par l'utilisation d'un réflecteur périphérique en acier inoxydable et de couches absorbants en uranium appauvri de part et d'autre du cœur, à sa partie inférieure et à sa partie supérieure, il est possible de n'équiper qu'un assemblage combustible sur deux dans le cœur avec un ensemble comportant à la fois une barre de commande et une barre de variation de spectre.

On voit sur la figure 3 que, parmi les cent quatre vingt treize assemblages combustibles constituant le cœur, il existe quatre vingt seize assemblages 30 recevant une barre de commande et une barre de variation de spectre et quatre vingt dix sept assemblages 31 ne recevant qu'une grappe de bouchons.

Il sera donc possible d'implanter au-dessus du couvercle 2 de la cuve 1 les mécanismes de déplacement de barres de commande comportant un mécanisme coaxial d'insertion et d'extraction des barres de variation de spectre, alors que la disposition de tels mécanismes à la verticale de chacun des assemblages aurait été très difficile et remettait en cause la conception de la cuve, de son couvercle et des équipements internes.

Le dispositif suivant l'invention a donc l'avantage de permettre une mise en place de l'ensemble des barres de commande et des barres de variation de spectre, sans nécessiter de modification importante de la cuve d'un réacteur nucléaire du type à eau sous pression. D'autre part, grâce à l'effet de réflecteur du cloisonnement périphérique du cœur, à l'effet d'absorption des couches supérieures et inférieures d'uranium appauvri du cœur et à l'effet de déplacement du spectre accru des barres de variation de spectre neutronique, on peut améliorer considérablement les conditions d'exploitation du combustible du cœur du réacteur.

Ces améliorations sensibles génératrices d'économies importantes sur le coût du combustible sont obtenues au prix d'une modification relativement peu importante de la structure du réacteur.

L'invention ne se limite pas au mode de réalisation qui vient d'être décrit.

C'est ainsi qu'on peut imaginer une répartition différente des tubes-guides 32 et 33 recevant la barre de commande et la barre de variation de spectre dans chacun des assemblages 30. On peut également concevoir une répartition différente des assemblages recevant les barres de commande et les barres de variation de spectre.

On peut également imaginer des configurations où ces deux types de barres ne sont pas associés aux mêmes assemblages du cœur. On peut également imaginer des grappes constituant les barres de commande et de variation de spectre comportant un nombre différent de crayons absorbants.

Pour les barres de variation de spectre on peut imaginer l'utilisation de matériaux absorbants différents de l'uranium appauvri, renfermant ou ne renfermant pas de matériau fertile susceptible de se transformer en matériau fissile sous l'effet du bombardement neutronique.

On peut imaginer des dispositifs d'un type quelconque, mécanique, hydraulique ou pneumatique pour le déplacement des barres de commande et pour l'insertion ou l'extraction complète des barres de variation de spectre.

L'invention s'applique à tout réacteur nucléaire refroidi et modéré à l'eau légère sous pression comportant des assemblages combustibles disposés verticalement, à l'intérieur desquels on déplace verticalement des barres de commande pour la conduite du réacteur.

**Revendications**

1. Réacteur nucléaire à rendement amélioré comprenant une cuve (1) contenant un cœur (7) constitué par des assemblages combustibles fissiles (6) disposés côte à côte et verticalement, plongeant dans de l'eau légère sous pression constituant le fluide modérateur et de refroidissement du réacteur, des barres de commande (24) en matériau absorbant les neutrons déplaçables verticalement dans le cœur pour régler la puissance du réacteur, et des barres de variation du spectre d'énergie des neutrons (27), associées à des dispositifs de déplacement vertical permettant leur insertion complète dans une partie au moins des assemblages (6) du cœur ou leur extraction complète pour faire varier le rapport du volume de modérateur au volume de matière fissile dans le cœur (7) et déplacer le spectre d'énergie des neutrons, ces barres (27) étant réparties dans toute la section du cœur, caractérisé en ce qu'il comporte:

— un cloisonnement métallique massif (18) en matériau réfléchissant les neutrons à haute énergie, disposé à la périphérie du cœur (77) et sur toute sa hauteur et,

— deux couches de matériau absorbant les neutrons à basse énergie (19 et 20) et renfermant de la matière fertile disposées l'une à la partie inférieure du cœur (7) et l'autre, à sa partie supérieure, sur toute sa section et «en ce que les barres de variation du spectre d'énergie des neutrons (27) sont en un matériau absorbant les neutrons à basse énergie.»

2. Réacteur nucléaire suivant la revendication 1, caractérisé par le fait que le cloisonnement métallique massif (18: disposé à la périphérie du cœur est en acier inoxydable.

3. Réacteur nucléaire suivant l'une quelconque des revendications 1 et 2, caractérisé par le fait que les couches de matériau absorbant les neutrons (19 et 20) disposées à la partie inférieure et à la partie supérieure du cœur sont en uranium appauvri en uranium 235.

4. Réacteur nucléaire suivant la revendication 3, caractérisé par le fait que les couches en uranium appauvri (19 et 20) à la partie inférieure et à la partie supérieure du cœur sont constituées par des pastilles en oxyde d'uranium appauvri disposées dans les gaines tubulaires des crayons combustibles à chacune de leurs extrêmités.

5. Réacteur nucléaire suivant l'une quelconque des revendications 1 à 4, caractérisé par le fait que les barres de variaton du spectre des neutrons (27) sont constituées par des grappes de crayons disposés de façon à s'engager sur toute leur hauteur dans une partie (33) des tubes guides des assemblages (6), chaque barre de variation de spectre (27) étant associé à un assemblage (6) particulier.

6. Réacteur nucléaire suivant la revendication 5, caractérisé par le fait que les barres de variation de spectre (27) sont associées à un assemblage (6) sur deux dans le cœur, suivant une disposition en damier dans la section transversale de ce cœur (7).

7. Réacteur nucléaire suivant la revendication 6, caractérisé par le fait qu'à chacun des assemblages auxquels est associée une barre de variation de spectre (27) est également associée une barre de commande (24) comportant des crayons de matériaux absorbants s'engageant dans l'ensemble des tubes-guides (32) de l'assemblage qui ne sont pas occupés par la barre de variation de spectre (27), tous les autres assemblages (6) du cœur ne recevant ni barre de variation de spectre (27) ni barre de commande (24).

8. Réacteur nucléaire selon la revendication 7, caractérisé par le fait que la barre de commande (24) et la barre de variation de spectre (27) associées à un même assemblage (6) sont associées à un mécanisme de déplacement commun.

9. Réacteur nucléaire selon l'une quelconque des revendications précédentes, caractérisé en ce que certaines au moins des barres de variation du spectre d'énergie contiennent du matériau fertile.

10. Réacteur nucléaire selon l'une quelconque des revendications précédentes, caractérisé en ce que les barres de variation de spectre absorbent sélectivement les neutrons lents.

## Patentansprüche

1. Kernreaktor mit verbesserter Leistung mit einem Gefäss (1), das einen Kern (7) enthält, der durch Spaltmaterial-Brennelemente (6) gebildet ist, die vertikal nebeneinander angeordnet sind, wobei sie in unter Druck stehendes Leichtwasser eingetaucht sind, welches das Moderator- und Kühlfluid des Reaktors bildet, wobei im Kern Regelstangen (24) aus Neutronen absorbierendem Material in vertikaler Richtung bewegbar sind, um die Leistungsabgabe des Reaktors zu steuern, und wobei Stangen (27) zur Änderung des Neutronenenergiespektrums vorgesehen sind, die Vorrichtungen zur Vertikalbewegung zugeordnet sind, welche das vollständige Eintauchen dieser Stangen in zumindest einen Teil der Brennelemente (6) oder ihr vollständiges Herausziehen gestatten, um das Verhältnis des Moderatorvolumens zum Volume des Spaltmaterials im Kern (7) zu verändern und das Neutronenenergiespektrum zu verlagern, wobei die Stangen (27) über den ganzen Querschnitt des Kernes verteilt sind, dadurch gekennzeichnet, dass

— eine massive metallische Umhüllung (18) aus einem Neutronen hoher Energie reflektierendem Material vorgesehen ist, die am Umfang des Kerns (77) über dessen gesamte Höhe angeordnet ist,

— und zwei Schichten (19, 20) aus Neutronen mit geringer Energie absorbierendem Material, welche das Brutmaterial einschliessen, wobei die eine im unteren Teil des Kerns (7) und die andere in seinem oberen Teil über den gesamten Kernquerschnitt angeordnet ist,

— und dass die Stangen (27) zur Änderung des Neutronenenergiespektrums aus einem Neutronen mit geringer Engergie absorbierendem Material bestehen.

2. Kernreaktor nach Anspruch 1, dadurch gekennzeichnet, dass die massive metallische Umhüllung (18) am Umfang des Kernes aus rostfreiem Stahl besteht.

3. Kernreaktor nach Anspruch 1 oder 2, dadurch gekennzeichnet, dass die Schichten (19, 20) aus Neutronen absorbierendem Material im unteren und im oberen Teil des Kernes aus an Uran 235 verarmtem Uran bestehen.

4. Kernreaktor nach Anspruch 3, dadurch gekennzeichnet, dass die Schichten (19, 20) aus verarmtem Uran im unteren Teil und im oberen Teil des Kernes aus Tabletten aus verarmtem Uranoxyd bestehen, die in Hüllrohren von Brennstäben an jedem Ende derselben angeordnet sind.

5. Kernreaktor nach einem der Ansprüche 1 bis 4, dadurch gekennzeichnet, dass die Stangen (27) zur Änderung des Neutronenenergiespektrums durch Stabbündel gebildet sind, die derart angeordnet sind, dass sie über ihre gesamte Höhe in einen Teil (33) der Führungsrohre der Brennelemente (6) eingreifen, wobei jede Stange (27) zur Änderung des Energiespektrums einem besonderen Brennelement (6) zugeordnet ist.

6. Kernreaktor nach Anspruch 5, dadurch gekennzeichnet, dass die Stangen (27) zur Änderung des Energiespektrums jedem zweiten Brennelement (6) im Kern in Schachbrettanordnung über den Querschnitt des Kernes (6) zugeordnet sind.

7. Kernreaktor nach Anspruch 6, dadurch gekennzeichnet, dass jedem der Brennelemente, denen eine Stange (27) zur Änderung des Energiespektrums zugeordnet ist, auch eine Regelstange (24) zugeordnet ist, die Stäbe aus absorbierendem Material aufweist, welche in die Anordnung aus Führungsrohren (32) des Brennelementes eingreifen, welche nicht von der Stange (27) zur Änderung des Spektrums besetzt sind, wobei alle anderen Brennelemente (6) des Kernes weder eine Stange (27) zur Änderung des Energiespektrums, noch eine Regelstange (24) enthalten.

8. Kernreaktor nach Anspruch 7, dadurch gekennzeichnet, dass die Regelstange (24) und die Stange (27) zur Änderung des Spektrums, die ein und demselben Brennelement (6) zugeordnet sind, einen gemeinsamen Verstellmechanismus haben.

9. Kernreaktor nach einem der vorhergehenden Ansprüche, dadurch gekennzeichnet, dass zumindest vorbestimmte der Stangen zur Änderung des Energiespektrums Brutmaterial enthalten.

10. Kernreaktor nach einem der vorhergehenden Ansprüche, dadurch gekennzeichnet, dass die Stangen zur Änderung des Spektrums selektiv langsame Neutronen absorbieren.

**Claims**

1. A nuclear reactor with improved efficiency comprising a vessel (1) containing a core (7) consisting of fissile fuel assemblies (6) arranged side by side and vertically, immersed in pressurized light water forming the moderator and cooling fluid of the reactor, control bars (24) of neutron-absorbing material movable vertically in the core to control the power of the reactor, and neutron energy spectrum variation bars (27) associated with devices for vertical movement permitting their total insertion into at least a part of the assemblies (6) of the core or their total extraction so as to vary the ratio of the volume of the moderator to the volume of fissile material in the core (7) and to shift the neutron energy spectrum, the bars (27) being distributed throughout the cross-section to the core, characterized in that it comprises:
— a solid metal partition (18) of material which reflects high energy neutrons, aranged at the circumference of the core (7) and over its entire height, and
— two layers (19 and 20) of material absorbing low energy neutrons and containing fertile material, arranged one at the lower part of the core (7) and the other at its upper part, throughout its cross-section, and
— in that the neutron energy spectrum variation bars (27) are of a material which absorbs low energy neutrons.

2. A nuclear reactor as claimed in claim 1, characterized in that the solid metal partition (18) at the circumference of the core is of stainless steel.

3. A nuclear reactor as claimed in either of claims 1 and 2, characterized in that the layers of neutron-absorbing material (19 and 20) arranged at the lower part and at the upper part of the core are of U-235 depleted uranium.

4. A nuclear reactor as claimed in claim 3, characterized in that the layers of depleted uranium (19 and 20) at the lower part and at the upper part of the core consist of pellets of depleted uranium oxide arranged in the tubular sheaths of the fuel rods at each of their ends.

5. A nuclear reactor as claimed in any one of claims 1 to 4, characterized in that the neutron spectrum variation bars (27) consist of clusters of rods arranged so as to engage over their total height in some (33) of the guide tubes of the assemblies (6), each spectrum variation bar (27) being associated with a respective assembly (6).

6. A nuclear reactor as claimed in claim 5, characterized in that the spectrum variation bars (27) are associated with one assembly (6) in two in the core, according to a checkerboard arrangement in the cross-section of the core (7).

7. A nuclear reactor as claimed in claim 6, characterized that there is likewise associated with each of the assemblies with which a spectrum variation bar (27) is associated, a control bar (24) comprising rods of absorbing material engaged in all those guide-tubes (32) of the assembly which are not occupied by the spectrum variation bar (27), all the other assemblies (6) in the core having neither a spectrum variation bar (27) nor a control bar (24).

8. A nuclear reactor as claimed in claim 7, characterized in that the control bar (24) and the spectrum variation bar (27) associated with a same assembly (6) are associated with a common movement mechanism.

9. A nuclear reactor as claimed in any one of the preceding claims, characterized in that some at least of the energy spectrum variation bars contain fertile material.

10. A nuclear reactor as claimed in any one of the preceding claims, characterized in that the spectrum variation bars selectively absorb slow neutrons.

Fig 1

Fig 2

Fig 3

Fig 4

0 108 020